# FASCICULE DE BREVET EUROPEEN

(11) **EP 3 384 180 B1**
(45) Date de publication et mention de la délivrance du brevet: **21.04.2021**
(21) Numéro de dépôt: 16819136.9
(22) Date de dépôt: 30.11.2016
(51) Int. Cl.: F16H 57/12, F02C 7/36

(54) **RÉDUCTEUR DE VITESSE A DEUX LIGNES INTERMÉDIAIRES POUR TURBOPROPULSEUR, TURBOPROPULSEUR COMPORTANT LEDIT RÉDUCTEUR**
UNTERSETZUNGSGETRIEBE MIT ZWEI ZWISCHENLEITUNGEN FÜR EINEN TURBOPROPMOTOR, TURBOPROMOTOR MIT BESAGTEM UNTERSETZUNGSGETRIEBE
SPEED REDUCER WITH TWO INTERMEDIATE LINES FOR A TURBOPROP ENGINE, TURBOPROP ENGINE COMPRISING SAID REDUCER

(30) Priorité: 02.12.2015 FR 1561733
(43) Date de publication de la demande: 10.10.2018
(73) Titulaire: Safran Transmission Systems, 92700 Colombes (FR)
(72) Inventeur: MATHIEU, Antoine, 92400 Courbevoie (FR); FERAUD, Benjamin, 64800 Coarraze (FR); MORELLI, Boris Pierre Marcel, 75014 Paris (FR)
(74) Mandataire: Cabinet Camus Lebkiri
(86) Numéro de dépôt international: PCT/FR2016/053140
(87) Numéro de publication internationale: WO 2017/093657

(56) Documents cités:
- WO-A2-03/086836
- DE-A1- 19 852 394
- FR-A1- 2 629 172
- GB-A- 633 971
- US-A1- 2007 295 136

## Description

### DOMAINE TECHNIQUE DE L'INVENTION

L'invention se rapporte au domaine général des aéronefs. Elle concerne plus particulièrement un réducteur de vitesse à deux lignes intermédiaires pour une turbomachine telle qu'un turbopropulseur.

### ARRIERE-PLAN TECHNOLOGIQUE DE L'INVENTION

Un turbopropulseur comporte une entrée d'air, des compresseurs, une chambre à combustion, une turbine, une hélice ainsi qu'un réducteur de vitesse. Placé entre la turbine et l'axe de l'hélice, un réducteur de vitesse est utilisé pour réduire la vitesse de rotation de l'hélice par rapport à la vitesse de rotation de l'arbre de la turbine, ladite vitesse de rotation de la turbine étant trop rapide pour alimenter ladite hélice.

De nombreux types de réducteurs de vitesses existent notamment les réducteurs à trains épicycloïdaux, à chaines, à vis sans fin, à lignes intermédiaires d'entrainement, etc.

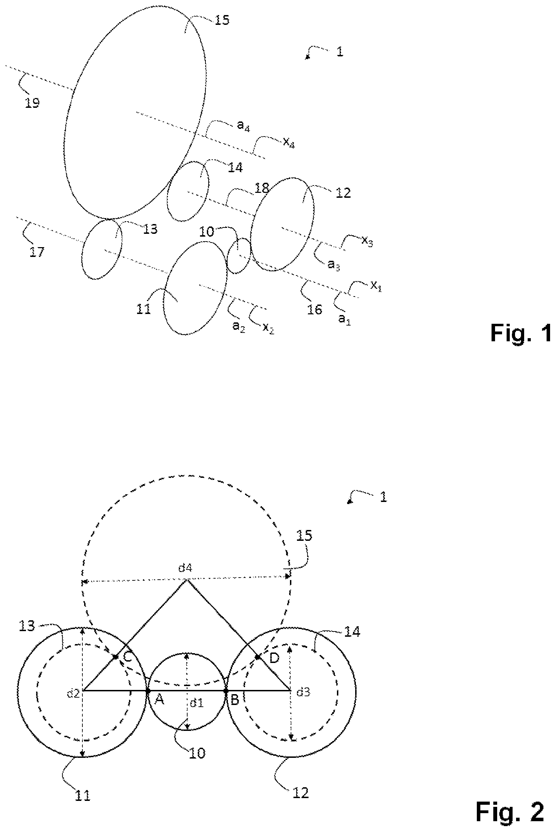

Dans un turbopropulseur, l'utilisation d'un réducteur à deux lignes intermédiaires est particulièrement intéressante car un tel réducteur permet une réduction de vitesse importante, dans un espace confiné et avec une masse maîtrisée. Un réducteur à deux lignes intermédiaires 1 est représenté schématiquement sur la figure 1. En référence à la figure 1, le réducteur 1 comporte :
- une ligne d'entrée 16 comportant un pignon d'entrée 10 porté par un arbre d'entrée a₁,
- une première ligne intermédiaire 17 comportant un premier pignon intermédiaire 11 et un troisième pignon intermédiaire 13 portés par un premier arbre intermédiaire a₂,
- une seconde ligne intermédiaire 18 comportant un second pignon intermédiaire 12 et un quatrième pignon intermédiaire 14 portés par un second arbre intermédiaire a₃,
- une ligne de sortie 19 comportant un pignon de sortie 15 porté par un arbre de sortie a₄.

Lorsque le réducteur 1 est utilisé dans un turbopropulseur, l'arbre de sortie a₄ de la ligne de sortie 19 est l'arbre de l'hélice et l'arbre d'entrée a₁ de la ligne d'entrée 16 est l'arbre de la turbine. Ainsi, la vitesse de rotation de l'arbre de sortie a₄ est réduite par rapport à la vitesse de rotation de l'arbre d'entrée a₁. Pour ce faire, la moitié de la puissance de l'arbre d'entrée a₁ doit transiter par chacun des arbres intermédiaires a₂ et a₃ pour enfin être transmise à l'arbre de sortie a₄. La transmission de puissance se fait par l'intermédiaire des pignons engrenés les uns avec les autres.

Cependant, de tels réducteurs sont des systèmes hyperstatiques c'est-à-dire que sans aménagement particulier, il est possible qu'une ligne intermédiaire passe la majorité de la puissance moteur, tandis que l'autre ligne intermédiaire ne passe pratiquement pas de puissance. En effet, il est difficile de garantir un engrenage optimal des pignons les uns avec les autres et ainsi une répartition égale de la puissance du pignon d'entrée 10 entre le premier pignon intermédiaire 11 et le second pignon intermédiaire 12 et, par conséquent, entre le troisième pignon intermédiaire 13 et le quatrième pignon intermédiaire 14. La figure 2 représente une vue de face du réducteur de vitesse à deux lignes intermédiaires 1 présenté à la figure 1. En référence à la figure 2, même si le pignon d'entrée 10 est en contact avec le premier pignon intermédiaire 11 et le second pignon intermédiaire 12 au niveau, respectivement, des points A et B, il est difficile de garantir qu'aucun jeu n'est présent au niveau des points C et D. On note que les points C et D correspondent aux points de contact, respectivement, du troisième pignon intermédiaire 13 avec le pignon de sortie 15 et du quatrième pignon intermédiaire 14 avec le pignon de sortie 15.

Ainsi, un système dit de « répartition de charges » ou « répartition de couples » est nécessaire pour s'assurer que la moitié de la puissance transite par chacune des lignes intermédiaires 17 et 18.

Par exemple, la demande de brevet US n°1351321A décrit un système de répartition de charges par l'ajout d'un degré de liberté vertical à un pignon d'entrée par l'intermédiaire d'une pièce rectangulaire pouvant glisser verticalement. Ce degré de liberté permet audit pignon d'entrée de se positionner librement selon un axe vertical et ainsi d'assurer une bonne répartition du couple entre les lignes intermédiaires de transmission. Le ressort de compression, positionné en dessous de la pièce rectangulaire, a pour fonction de compenser l'effort vertical dû au poids du pignon.

Cependant, le problème d'un tel système de « répartition de charges » est que l'utilisation de la pièce rectangulaire montée sur le ressort de compression est complexe à réaliser et risque de dégrader la fiabilité du réducteur de vitesse. En outre, le système selon l'art antérieur ne permet pas au pignon d'entrée de se déplacer de manière optimale.

Le brevet FR 2 629 172 décrit un réducteur de vitesses à deux lignes intermédiaires comprenant un ressort de torsion pour compenser le jeu entre certaines roues , mais ne permet pas une équirépartition de la transmission de la puissance provenant de l'arbre d'entrée vers le premier arbre intermédiaire de la première ligne intermédiaire et le second arbre intermédiaire de la seconde ligne intermédiaire

### DESCRIPTION GENERALE DE L'INVENTION

L'invention a pour objet de simplifier et d'améliorer le système de répartition de charges entre les deux lignes intermédiaires du réducteur.
Selon un premier aspect, l'invention concerne un réducteur de vitesse à deux lignes intermédiaires pour turbopropulseur, ledit réducteur comportant :
- une ligne d'entrée comportant un arbre d'entrée portant un pignon d'entrée,
- une première ligne intermédiaire comportant un premier arbre intermédiaire portant un premier pignon intermédiaire,
- une seconde ligne intermédiaire comportant un second arbre intermédiaire portant un second pignon intermédiaire,
- un ressort maintenu par un bâti,
- le pignon d'entrée est engrené avec le premier pignon intermédiaire et le second pignon intermédiaire,
caractérisé en ce que le ressort entoure une portion longitudinale de l'arbre d'entrée pour permettre un déplacement de cet arbre d'entrée et donc du pignon d'entrée vers une position d'équilibre correspondant à une équirépartition de la transmission de la puissance provenant de l'arbre d'entrée vers le premier arbre intermédiaire de la première ligne intermédiaire et le second arbre intermédiaire de la seconde ligne intermédiaire et que le déplacement de l'arbre d'entrée est selon un axe sensiblement perpendiculaire à un axe de rotation de l'arbre d'entrée.

Le réducteur selon le premier aspect permet de résoudre les problèmes préalablement cités.

En effet, le réducteur selon l'invention est plus simple à réaliser que le réducteur selon l'art antérieur car la pièce rectangulaire montée sur le ressort de compression est remplacée par un unique ressort. L'utilisation du ressort permet donc de diminuer le nombre de pièces tout en remplissant la même fonction.

La présence du ressort entourant une portion longitudinale de l'arbre d'entrée permet au pignon d'entrée porté par l'arbre d'entrée de se déplacer librement aussi bien verticalement que latéralement. En effet, le couple entre les lignes intermédiaires est plus efficacement réparti lorsque l'arbre d'entrée portant le pignon d'entrée a un degré de liberté latéral. Ainsi, lorsque le pignon d'entrée est libre de se déplacer radialement, ledit pignon d'entrée se positionne naturellement dans une position où les efforts d'engrènement de la première ligne intermédiaire et les efforts d'engrènement de la seconde ligne intermédiaire s'annulent. Dans cette position d'équilibre les couples transmis aux première et seconde lignes intermédiaires sont égaux.

Outre les caractéristiques qui viennent d'être évoquées dans le paragraphe précédent, le réducteur de vitesse selon le premier aspect de l'invention peut présenter une ou plusieurs caractéristiques complémentaires parmi les suivantes, considérées individuellement ou selon toutes les combinaisons techniquement possibles.

Selon un mode de réalisation non limitatif, le maintien du ressort par le bâti est réalisé par fixation d'une première portion dudit ressort sur le bâti.

Selon un mode de réalisation non limitatif, le maintien du ressort par le bâti est réalisé par insertion dudit ressort dans une rainure du bâti.

Selon un mode de réalisation non limitatif, un roulement comportant une bague intérieure et une bague extérieure est positionné entre l'arbre d'entrée et le ressort.

Selon un mode de réalisation non limitatif, une deuxième portion du ressort est fixée à la bague extérieure du roulement.

Selon un mode de réalisation non limitatif, la bague intérieure du roulement est fixée à l'arbre d'entrée.

Selon un mode de réalisation non limitatif, la bague intérieure du roulement est fixée à l'arbre d'entrée par frettage.

Selon un mode de réalisation non limitatif, le ressort est spiral.

Selon un mode de réalisation non limitatif, le bâti est un carter du réducteur.

Selon un second aspect, l'invention concerne un turbopropulseur comportant le réducteur de vitesse selon le premier aspect de l'invention.

L'invention et ses différentes applications seront mieux comprises à la lecture de la description qui suit et à l'examen des figures qui l'accompagnent.

### BREVE DESCRIPTION DES FIGURES

Les figures ne sont présentées qu'à titre indicatif et nullement limitatif de l'invention.
Les figures montrent :
   - à la figure 1, généralement connue, un schéma d'un réducteur de vitesse à deux lignes intermédiaires, vu en perspective,
   - à la figure 2, déjà décrite, un schéma du réducteur de vitesse présenté à la figure 1, vu de face,
   - à la figure 3, un schéma en coupe axiale d'une ligne d'entrée du réducteur de vitesse selon un mode de réalisation de l'invention,
   - à la figure 4, une vue en coupe selon l'axe AA de la ligne d'entrée présentée à la figure 3,
   - à la figure 5, un schéma du ressort selon un mode de réalisation lorsque ledit ressort subit une déformation.

### DESCRIPTION DETAILLEE D'AU MOINS UN MODE DE REALISATION DE L'INVENTION

Sauf précision contraire, un même élément apparaissant sur des figures différentes présente une référence unique.

L'invention concerne un réducteur de vitesse 1 à deux lignes intermédiaires permettant une répartition de charges optimale entre lesdites lignes intermédiaires.

Dans un turbopropulseur, placé entre la turbine et l'hélice, un réducteur de vitesse 1 est utilisé pour diminuer la vitesse de rotation de l'arbre de l'hélice par rapport à la vitesse de rotation de l'arbre de la turbine.

En référence à la figure 1 qui représente schématiquement le principe d'un réducteur de vitesse 1 à deux lignes intermédiaires, un tel réducteur de vitesse 1 comporte :
- une ligne d'entrée 16,
- une première ligne intermédiaire 17,
- une seconde ligne intermédiaire 18,
- une ligne de sortie 19.

La ligne d'entrée 16 comprend un arbre d'entrée a₁ portant un pignon d'entrée 10, l'arbre d'entrée a₁ correspondant à l'arbre de la turbine du turbopropulseur (non représenté). Le pignon d'entrée 10 est engrené avec un premier pignon intermédiaire 11 et un second pignon intermédiaire 12 portés, respectivement, par un premier arbre intermédiaire a₂ et un second arbre intermédiaire a₃. Le premier pignon intermédiaire 11 monté sur le premier arbre intermédiaire a₂ et le second pignon intermédiaire 11 monté sur le second arbre intermédiaire a₃ forment, respectivement, la première ligne intermédiaire 17 et la seconde ligne intermédiaire 18. La première ligne intermédiaire 17 comporte un troisième pignon intermédiaire 13 monté sur le premier arbre intermédiaire a₂ et la seconde ligne intermédiaire 18 comporte un quatrième pignon intermédiaire 14 monté sur le second arbre intermédiaire a₃. La ligne de sortie 19 comprend un pignon de sortie 15 porté par un arbre de sortie a₄, ledit arbre de sortie a₄ correspondant à l'arbre de l'hélice du turbopropulseur (non représenté). Le pignon de sortie 15 est engrené avec le troisième pignon intermédiaire 13 et le quatrième pignon intermédiaire 14.

On note que la ligne d'entrée 16, la première ligne intermédiaire 17, la seconde ligne intermédiaire 18 ainsi que la ligne de sortie 19 sont parallèles. En outre, on note que la ligne d'entrée 16, et la ligne de sortie 19 sont généralement montées dans un carter 25 du réducteur 1.

Lorsque le pignon d'entrée 10 est mis en rotation selon un premier axe xi par l'intermédiaire de l'arbre d'entrée a₁, ledit pignon d'entrée 10, engrainé avec le premier pignon intermédiaire 11 et le second pignon intermédiaire 12, entraine la rotation desdits pignons intermédiaires 11 et 12 selon, respectivement, un second axe x₂ et un troisième axe x₃. En effet, la ligne d'entrée 16 transfert sa puissance vers la première ligne intermédiaire 17 et la seconde ligne intermédiaire 18. On note que le premier pignon intermédiaire 11 et le second pignon intermédiaire 12 présentent un diamètre d2 et un nombre de dents supérieurs respectivement au diamètre d1 et au nombre de dents du pignon d'entrée 10. La rotation du premier arbre intermédiaire a₂ entrainé par la rotation du premier pignon intermédiaire 11 entraine la rotation du troisième pignon intermédiaire 13. De la même manière, la rotation du deuxième arbre intermédiaire a₃, entrainé par la rotation du second pignon intermédiaire 12, entraine la rotation du quatrième pignon intermédiaire 14. On note que selon le mode de réalisation présenté à la figure 2, le troisième pignon intermédiaire 13 et le quatrième pignon intermédiaire 14 présentent un diamètre d3 et un nombre de dents inférieurs, respectivement, au diamètre d2 et au nombre de dents du premier pignon intermédiaire 11 et du second pignon intermédiaire 12. L'engrainage du troisième pignon intermédiaire 13 et du quatrième pignon intermédiaire 14 avec le pignon de sortie 15 entraine la rotation dudit pignon de sortie 15 et ainsi la rotation de l'arbre de sortie a₄ selon un quatrième axe de rotation a₄.

Le diamètre d4 du pignon de sortie 15 est supérieur au diamètre d3 des troisième et quatrième pignons intermédiaires 13 et 14. L'utilisation de pignons dentés de diamètres différents permet de modifier la vitesse de rotation de l'arbre de sortie a₄ par rapport à la vitesse de rotation de l'arbre d'entrée a₁ de sorte à réduire la vitesse de l'arbre de sortie a₄ (l'arbre de l'hélice) par rapport à l'arbre d'entrée a₁ (l'arbre de la turbine).

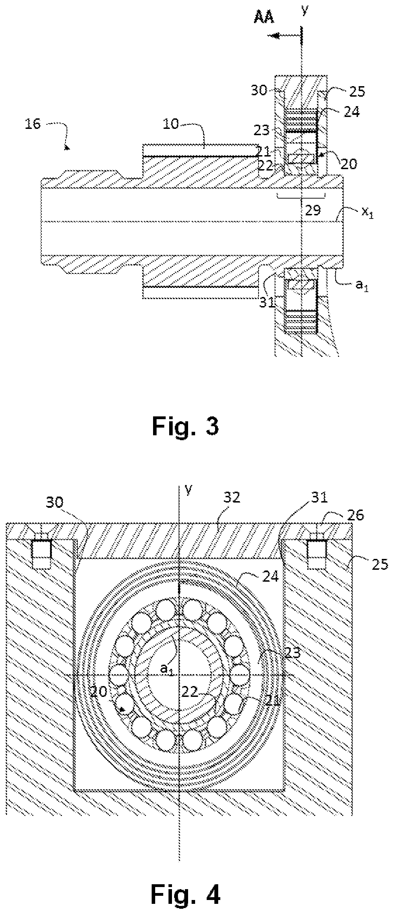

La figure 3 représente une coupe axiale de la ligne d'entrée 16 dudit réducteur de vitesse 1 selon un mode de réalisation de l'invention. En effet, le système de répartition de charges est positionné au niveau de la ligne d'entrée 16 du réducteur 1.

En référence à la figure 3, une portion longitudinale 29 de l'arbre d'entrée a₁ est montée dans le carter 25 du réducteur 1 par l'intermédiaire d'un orifice 31 dudit carter 25. Selon le mode de réalisation présenté aux figures 3 et 4, le carter 25 présente une rainure 30 pour recevoir ladite portion longitudinale 29 ainsi qu'un roulement 20 et un ressort 24. Par ailleurs, selon un mode de réalisation, une extrémité de l'arbre d'entrée a₁ (non représentée sur les figures) est maintenue par un système permettant une rotation libre de l'arbre d'entrée a₁. Selon un mode de réalisation, ledit système permettant une rotation libre de l'arbre d'entrée a₁ est formé par des cannelures rotulantes.

Comme explicité précédemment, la rainure 30 du carter 25 reçoit la portion longitudinale 29 de l'arbre d'entrée a₁, ladite portion 29 étant entourée par le roulement 20 lui-même entouré par le ressort 24. La rainure 30 est obstruée par l'intermédiaire d'un couvercle 32 fixé aux parois de la rainure 30 par des moyens de fixation 26.

Le roulement 20 est composé d'une bague extérieure 23 et une bague intérieure 22 entre lesquelles sont placées des billes 21. La bague intérieure 22 est fixée autour de la portion longitudinale 29 de l'arbre d'entrée a₁. Selon un mode de réalisation, le roulement 20 est fixé à l'arbre d'entrée a₁ par frettage.

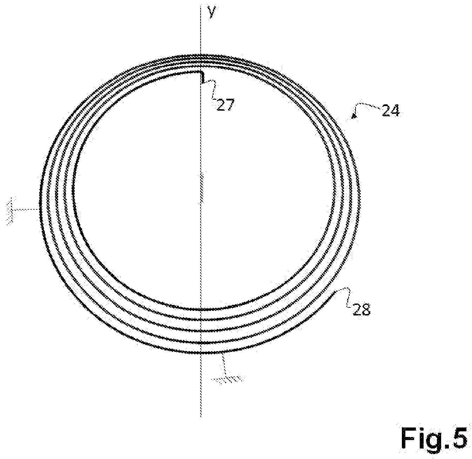

Le ressort 24 entoure la bague extérieure 23 du roulement 20. Selon le mode de réalisation présenté à la figure 5, le ressort 24 est spiral. Selon un mode de réalisation, une première extrémité 27 (visible sur la figure 5) du ressort 24 est fixée à la bague extérieure 23 du roulement 20. Par ailleurs, selon un mode de réalisation, une seconde extrémité 28 (visible sur la figure 5) est fixée au carter 25 du réducteur 1. Selon un autre mode de réalisation, une première partie est fixée au carter 25 et une seconde partie, à la bague extérieure 23. Par « partie » du ressort 24, on entend une portion du ressort 24 à l'exception de la première extrémité 27 et de la seconde extrémité 28 dudit ressort 24.

En outre, selon un mode de réalisation, le ressort 24 présente une raideur de torsion permettant de bloquer en rotation la bague extérieure 23 du roulement 20. Selon un mode de réalisation, la raideur de torsion du ressort 24 est élevée par rapport à la raideur radiale dudit ressort 24 pour permettre le déplacement radial du pignon d'entrée 10. Une faible raideur radiale du ressort 24 permet au pignon d'entrée 10 de se positionner librement et ainsi d'assurer une bonne répartition du couple entre les lignes intermédiaires 17 et 18. On note que la raideur de torsion et la raideur radiale du ressort 24 peuvent varier selon l'application.

Ainsi, lorsque le pignon d'entrée 10 adopte un mauvais positionnement engendrant une mauvaise transmission de la puissance de la ligne d'entrée 16 entre la première ligne intermédiaire 17 et la seconde ligne intermédiaire 18, ledit pignon d'entrée 10 va se déplacer naturellement pour reprendre une position d'équilibre permettant une équirépartition de la puissance entre les lignes intermédiaires 17 et 18. On note qu'une mauvaise transmission de la puissance de la ligne d'entrée 16 vers les lignes intermédiaires 17 et 18 conduit à l'obtention d'une ligne intermédiaire plus chargée que l'autre. Le couple transitant par la ligne intermédiaire la plus chargée est alors plus important que sur l'autre ligne intermédiaire donc l'effort engendré par ledit couple sur le pignon d'entrée 10 est plus important d'un côté que de l'autre.

La présence du ressort 24 entourant une portion longitudinale 29 de l'arbre d'entrée a₁ permet au pignon d'entrée 10 de se déplacer librement aussi bien verticalement que latéralement. Lorsque le pignon d'entrée 10 se déplace pour adopter une position d'équilibre, le ressort 24, fixé au carter 25 et à la bague extérieure 23 du roulement 20, est déformé. On note que le couple entre les lignes intermédiaires 17 et 18 est plus efficacement réparti lorsque l'arbre d'entrée a₁ portant le pignon d'entrée 10 a un degré de liberté latéral en plus d'un degré de liberté verticale. En effet, lorsque le pignon d'entrée 10 est libre de se déplacer radialement, ledit pignon d'entrée 10 se positionne naturellement dans une position où les efforts d'engrènement de la première ligne intermédiaire 17 et les efforts d'engrènement de la seconde ligne intermédiaire 18 s'annulent. Dans cette position d'équilibre les couples transmis aux première et seconde lignes intermédiaires 17 et 18 sont égaux.

La figure 5 représente un exemple de déformation du ressort 24 lorsque l'arbre d'entrée a₁ et par conséquent, le pignon d'entrée 10 adoptent un mauvais positionnement. En référence à la figure 5, le ressort 24 est déformé verticalement (selon l'axe y représenté sur la figure 4): comprimé sur une partie du ressort 24 et étiré au niveau d'une autre partie du ressort 24 c'est-à-dire que l'arbre d'entrée a₁ (non représenté) et donc le pignon d'entrée 10 s'est déplacé verticalement (selon l'axe y). On note que la déformation du ressort 24 peut également être réalisée selon d'autres directions autres que verticale, le ressort 24 permettant un déplacement de l'arbre d'entrée a₁ selon tout axe sensiblement perpendiculaire à l'axe de rotation xi de l'arbre d'entrée a₁.

A l'équilibre, les efforts sur le pignon d'entrée 10 dus aux couples sur les lignes intermédiaires 17 et 18 s'annulent, ce qui veut dire que les couples sur lesdites lignes intermédiaires 17 et 18 sont égaux.

## Revendications

1. Réducteur de vitesse (1) à deux lignes intermédiaires (17, 18) pour turbopropulseur, ledit réducteur (1) comportant :
- une ligne d'entrée (16) comportant un arbre d'entrée (a₁) portant un pignon d'entrée (10),
- une première ligne intermédiaire (17) comportant un premier arbre intermédiaire (a₂) portant un premier pignon intermédiaire (11),
- une seconde ligne intermédiaire (18) comportant un second arbre intermédiaire (a₃) portant un second pignon intermédiaire (12),
- un ressort (24) maintenu par un bâti (25),
- le pignon d'entrée (10) est engrené avec le premier pignon intermédiaire (11) et le second pignon intermédiaire (12), **caractérisé en ce que** le ressort (24) entoure une portion longitudinale (29) de l'arbre d'entrée (a₁) pour permettre un déplacement de cet arbre d'entrée (a₁) et donc du pignon d'entrée (10) vers une position d'équilibre correspondant à une équirépartition de la transmission de la puissance provenant de l'arbre d'entrée (a₁) vers le premier arbre intermédiaire (a₂) de la première ligne intermédiaire (17) et le second arbre intermédiaire (a₃) de la seconde ligne intermédiaire (18) et que le déplacement de l'arbre d'entrée (a₁) est selon un axe sensiblement perpendiculaire à un axe de rotation (x₁) de l'arbre d'entrée (a₁).

2. Réducteur (1) selon la revendication 1 **caractérisé en ce qu'**un roulement (20) comportant une bague intérieure (22) et une bague extérieure (23) est positionné entre l'arbre d'entrée (a₁) et le ressort (24).

3. Réducteur (1) selon la revendication 2, **caractérisé en ce qu'**une première extrémité (27) du ressort (24) est fixée à la bague extérieure (23) du roulement (20).

4. Réducteur (1) selon l'une quelconque des revendications 2 à 3 **caractérisé en ce que** la bague intérieure (22) du roulement (20) est fixée à l'arbre d'entrée (a₁).

5. Réducteur (1) selon la revendication 4 **caractérisé en ce que** la bague intérieure (22) du roulement (20) est fixée à l'arbre d'entrée (a₁) par frettage.

6. Réducteur (1) selon l'une quelconque des revendications 1 à 5 **caractérisé en ce que** le ressort (24) est spiral.

7. Réducteur (1) selon l'une quelconque des revendications 1 à 6 **caractérisé en ce que** le maintien du ressort (24) par le bâti (25) est réalisé par fixation d'une seconde extrémité (28) dudit ressort (24) sur le bâti (25).

8. Réducteur (1) selon l'une quelconque des revendications 1 à 6 **caractérisé en ce que** le maintien du ressort (24) par le bâti (25) est réalisé par insertion dudit ressort (24) dans une rainure (30) du bâti (25).

9. Réducteur (1) selon l'une quelconque des revendications 1 à 8 **caractérisée en ce que** le bâti (25) est un carter (25) du réducteur (1).

10. Turbopropulseur **caractérisé en ce qu'**elle comporte le réducteur de vitesse (1) à lignes intermédiaires selon l'une quelconque des revendications 1 à 9.

## Patentansprüche

1. Untersetzungsgetriebe (1) mit zwei Zwischenlinien (17, 18) für Turbo-Propeller-Triebwerk, wobei das genannte Untersetzungsgetriebe (1) umfasst:
- eine Eingangslinie (16), umfassend eine Eingangswelle (a₁), die ein Eingangsritzel (10) trägt;
- eine erste Zwischenlinie (17), umfassend eine erste Zwischenwelle (a₂), die ein erstes Zwischenritzel (11) trägt;
- eine zweite Zwischenlinie (18), umfassend eine zweite Zwischenwelle (a₃), die ein zweites Zwischenritzel (12) trägt;
- eine Feder (24), die von einem Gestell (25) getragen ist,
- ein Eingangsritzel (10) ist in das erste Zwischenritzel (11) und das zweite Zwischenritzel (12) eingegriffen,
**dadurch gekennzeichnet, dass** die Feder (24) einen länglichen Abschnitt (29) der Eingangswelle (a₁) umgibt, um eine Verschiebung dieser Eingangswelle (a₁) und somit des Eingangsritzels (10) zu einer Gleichgewichtsposition zu ermöglichen, die einer gleichmäßigen Verteilung der Übertragung der Leistung, die von der Eingangswelle (a₁) stammt, zur ersten Zwischenwelle (a₂) der ersten Zwischenlinie (17) und der zweiten Zwischenwelle (a₃) der zweiten Zwischenlinie (18) entspricht, und dass die Verschiebung der Eingangswelle (a₁) gemäß einer zu einer Rotationsachse (x₁) der Eingangswelle (a₁) deutlich lotrechten Achse erfolgt.

2. Untersetzungsgetriebe (1) gemäß Anspruch 1, **dadurch gekennzeichnet, dass** ein Lager (20), das einen Innenring (22) und einen Außenring (23) umfasst, zwischen der Eingangswelle (a₁) und der Feder (24) angeordnet ist.

3. Untersetzungsgetriebe (1) gemäß Anspruch 2, **dadurch gekennzeichnet, dass** ein erstes Ende (27) der Feder (24) am Außenring (23) des Lagers (20) befestigt ist.

4. Untersetzungsgetriebe (1) gemäß irgendeinem der Ansprüche 2 bis 3, **dadurch gekennzeichnet, dass** der Innenring (22) des Lagers (20) an der Eingangswelle (a₁) befestigt ist.

5. Untersetzungsgetriebe (1) gemäß Anspruch 4, **dadurch gekennzeichnet, dass** der Innenring (22) des Lagers (20) an der Eingangswelle (a₁) per Umschnürung befestigt ist.

6. Untersetzungsgetriebe (1) gemäß irgendeinem der Ansprüche 1 bis 5, **dadurch gekennzeichnet, dass** die Feder (24) eine Spiralfeder ist.

7. Untersetzungsgetriebe (1) gemäß irgendeinem der Ansprüche 1 bis 6, **dadurch gekennzeichnet, dass** das Halten der Feder (24) durch das Gestell (25) per Befestigung eines zweiten Endes (28) der genannten Feder (24) auf dem Gestell (25) realisiert ist.

8. Untersetzungsgetriebe (1) gemäß irgendeinem der Ansprüche 1 bis 6, **dadurch gekennzeichnet, dass** das Halten der Feder (24) durch das Gestell (25) per Einfügen der genannten Feder (24) in eine Nut (30) des Gestells (25) realisiert ist.

9. Untersetzungsgetriebe (1) gemäß irgendeinem der Ansprüche 1 bis 8, **dadurch gekennzeichnet, dass** das Gestell (25) ein Gehäuse (25) des Untersetzungsgetriebes (1) ist.

10. Turbo-Propeller-Triebwerk, **dadurch gekennzeichnet, dass** es das Untersetzungsgetriebe (1) mit Zwischenlinien gemäß irgendeinem der Ansprüche 1 bis 9 umfasst.

## Claims

1. Speed reducer (1) with two intermediate lines (17, 18) for a turboprop engine, said reducer (1) comprising:
- an input line (16) comprising an input shaft (a₁) bearing an input gear wheel (10),
- a first intermediate line (17) comprising a first intermediate shaft (a₂) bearing a first intermediate gear wheel (11),
- a second intermediate line (18) comprising a second intermediate shaft (a₃) bearing a second intermediate gear wheel (12),
- a spring (24) held by a frame (25),
- the input gear wheel (10) is meshed with the first intermediate gear wheel (11) and the second intermediate gear wheel (12),
**characterised in that** the spring (24) surrounds a longitudinal portion (29) of the input shaft (a₁) in order to allow a movement of this input shaft (a₁) and then the input gear wheel (10) towards an equilibrium position corresponding to an equal distribution of the transmission of the power coming from the input shaft (a₁) to the first intermediate shaft (a₂) of the first intermediate line (17) and the second intermediate shaft (a₃) of the second intermediate line (18) and that the movement of the input shaft (a₁) is along an axis substantially perpendicular to an axis of rotation (x₁) of the input shaft (a₁)

2. Reducer (1) according to claim 1 **characterised in that** a bearing (20) comprising an inner race (22) and an outer race (23) is positioned between the input shaft (a₁) and the spring (24).

3. Reducer (1) according to claim 2, **characterised in that** a first end (27) of the spring (24) is attached to the outer race (23) of the bearing (20).

4. Reducer (1) according to any of claims 2 to 3 **characterised in that** the inner race (22) of the bearing (20) is attached to the input shaft (a₁).

5. Reducer (1) according to claim 4 **characterised in that** the inner race (22) of the bearing (20) is attached to the input shaft (a₁) by shrink fitting.

6. Reducer (1) according to any of claims 1 to 5 **characterised in that** the spring (24) is spiral.

7. Reducer (1) according to any of claims 1 to 6 **characterised in that** the holding of the spring (24) by the frame (25) is achieved by attachment of a second end (28) of said spring (24) to the frame (25).

8. Reducer (1) according to any of claims 1 to 6 **characterised in that** the holding of the spring (24) by the frame (25) is achieved by insertion of said spring (24) into a groove (30) of the frame (25).

9. Reducer (1) according to any of claims 1 to 8 **characterised in that** the frame (25) is a casing (25) of the reducer (1).

10. Turboprop engine **characterised in that** it comprises the speed reducer (1) with intermediate lines according to any of claims 1 to 9.
